# EUROPEAN PATENT APPLICATION

(11) **EP 4 675 495 A1**
(43) Date of publication of application: **07.01.2026**
(21) Application number: 24763971.9
(22) Date of filing: 28.02.2024
(51) Int. Cl.: G06N 3/044, G06N 3/067, H01L 31/0232, H01L 33/06, H01L 33/10

(54) **OPTICAL DEVICE**

(30) Priority: 28.02.2023 JP 2023030261
(71) Applicant: INSTITUTE OF SCIENCE TOKYO, Tokyo 152-8550 (JP)
(72) Inventor: NAKAGAWA Shigeru, Tokyo 152-8550 (JP); AMEMIYA Tomohiro, Tokyo 152-8550 (JP)
(74) Representative: Meissner Bolte Nürnberg
(86) International application number: PCT/JP2024/007259
(87) International publication number: WO 2024/181492

(57) **Abstract**

An optical device includes: an input electrode to which an electrical signal is input; a conversion unit that converts an electrical signal and an optical signal into each other in a nonlinear manner; a waveguide unit inside which an optical signal generated by the conversion unit through conversion of the electrical signal input to the input electrode propagates; a plurality of output electrodes that each output an electrical signal generated by the conversion unit through conversion of the optical signal propagating in the waveguide unit; and a reflection unit that is arranged so as to reflect, toward the inside of the waveguide unit, the optical signal propagating in the waveguide unit.

## Description

### TECHNICAL FIELD

The present invention relates to an optical device.

### BACKGROUND ART

In recent years, a technique called reservoir computing has been attracting attention as a method for implementing machine learning using neural networks in hardware. For example, time-delay reservoir computing, which uses a time-delay system using a semiconductor laser, has been studied (see Non-Patent Literature 1).

### RELATED-ART LITERATURE

### NON-PATENT LITERATURE

Non-Patent Literature 1: Larger, L., Soriano, M., Brunner, D., Appeltant, L., Gutierrez, J., Pesquera, L., Mirasso, C. and Fischer, I.: Photonic information processing beyond Turing: An optoelectronic implementation of reservoir computing, Opt. Express, Vol. 20, pp. 3241-3249 (2012)

### SUMMARY OF INVENTION

### TECHNICAL PROBLEM

However, time-delay reservoir computing requires feedback that delays signals in time, which imposes time constraints on the processing. For this reason, the range of applications of reservoir computing in the technology described in Non-Patent Literature 1 is limited.

The present invention has been made in view of such a situation, and one of exemplary objects thereof is to provide a technology that enables reservoir computing to be widely used in many applications.

### SOLUTION TO PROBLEM

An optical device according to an embodiment of the present invention includes: an input electrode to which an electrical signal is input; a conversion unit that converts an electrical signal and an optical signal into each other in a nonlinear manner; a waveguide unit inside which an optical signal generated by the conversion unit through conversion of the electrical signal input to the input electrode propagates; a plurality of output electrodes that each output an electrical signal generated by the conversion unit through conversion of the optical signal propagating in the waveguide unit; and a reflection unit that is arranged so as to reflect, toward the inside of the waveguide unit, the optical signal propagating in the waveguide unit.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present invention, it is possible to provide a technology that enables reservoir computing to be widely used in many applications.

### BRIEF DESCRIPTION OF DRAWINGS

[Fig. 1] Fig. 1 is a schematic configuration diagram of an information processing system according to the first embodiment.
[Fig. 2] Fig. 2 is a schematic perspective view of a reservoir according to the embodiment.
[Fig. 3] Fig. 3 is a top view of the reservoir according to the embodiment.
[Fig. 4] Fig. 4 is a cross-sectional view perpendicular to the Y axis of the reservoir according to the embodiment.
[Fig. 5] Fig. 5 is a cross-sectional view perpendicular to the Y axis of an input and output unit according to the embodiment.
[Fig. 6] Fig. 6 is a diagram showing the relationship between current flowing in an active layer and the amplification and absorption of an optical signal in the active layer.
[Fig. 7] Fig. 7 is a cross-sectional view perpendicular to the Y axis for explaining the configuration of a reflection unit according to the first embodiment.
[Fig. 8] Fig. 8 is a diagram for explaining an example of photon propagation in a reservoir according to the embodiment.
[Fig. 9] Fig. 9 is a diagram for explaining differences in photon amplification rate due to adjustment electrodes depending on a photon propagation direction when a substrate is oriented in a plane direction other than (100) and (111).
[Fig. 10] Fig. 10 is a cross-sectional view perpendicular to the Y axis of a reservoir according to the second embodiment.
[Fig. 11] Fig. 11 is a cross-sectional view perpendicular to the Y axis of a reservoir according to the third embodiment.

### DESCRIPTION OF EMBODIMENTS

Hereinafter, an embodiment for carrying out the present invention will be described in detail with reference to the accompanying drawing. In the explanation of the figures, like numerals represent like constituting elements, and duplicative explanations will be omitted appropriately. Further, the configuration mentioned below is merely an example, and does not limit the scope of the invention.

### (First embodiment)

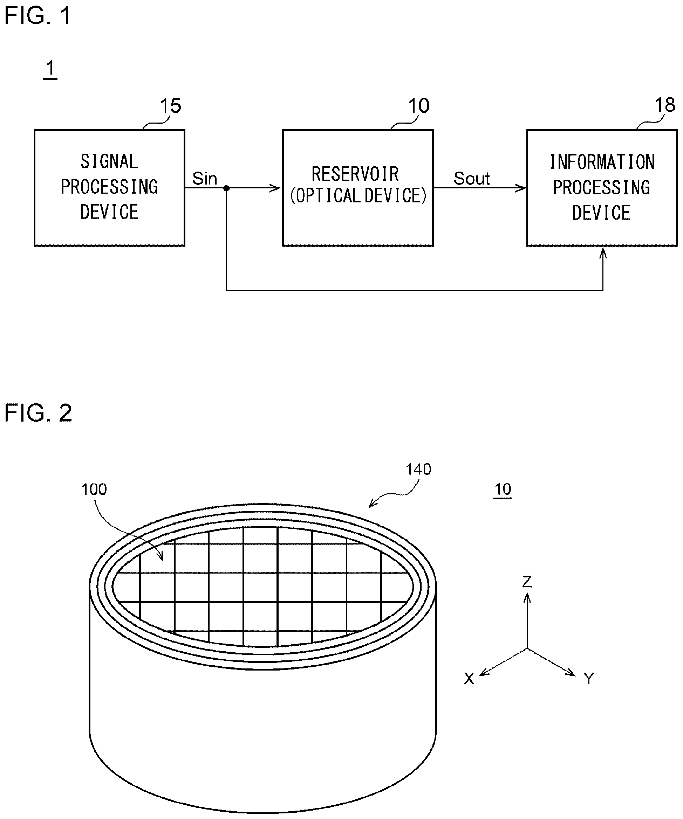

Fig. 1 is a schematic configuration diagram of an information processing system 1 according to the first embodiment. The information processing system 1 according to the present embodiment includes a signal input device 15, a reservoir 10 (optical device), and an information processing device 18. The information processing system 1 is configured to execute reservoir computing.

Reservoir computing can, for example, identify a series input from a dynamic pattern generated by the reservoir using a simple algorithm. The reservoir means a water reservoir. When a stone is thrown into the water, ripples are generated. The ripples change depending on the size, shape, and speed of the stone. Therefore, the ripples reflect the information of the stone thrown. When multiple stones are thrown into the water one after another, more complex ripples can be generated compared to when a single stone is thrown. The dynamic pattern of the ripples depends on the size and shape of the multiple stones thrown and the order in which the stones are thrown. Thus, the reservoir can be regarded as a device that converts a series input into a spatiotemporal pattern of ripples.

The reservoir 10 is configured to function as a reservoir in reservoir computing. The reservoir 10 receives various electric signals Sin from the signal input device 15 and outputs electrical signals Sout corresponding to the input electrical signals Sin to information processing device 18.

The signal input device 15 can input various electric signals Sin to the reservoir 10. The electric signal Sins are also transmitted to the information processing device 18. The information processing device 18 can perform learning processing based on the electric signals Sout output from the reservoir 10 to generate a learning model or can identify the electric signals Sin using the learning model. The signal input device 15 and the information processing device 18 may include a central processing unit (CPU), a random access memory (RAM), a read only memory (ROM), etc., as necessary.

Fig. 2 is a schematic perspective view of the reservoir 10 according to the present embodiment. The reservoir 10 includes a structure in which semiconductor layers are stacked. In the present specification, the stacking direction of the reservoir 10 is denoted as the Z-axis direction, and the X-axis, Y-axis, and Z-axis directions are orthogonal to each other. The reservoir 10 according to the present embodiment has an input and output unit 100 that performs input and output of various electrical signals and a reflection unit 140 that is provided so as to surround the input and output unit 100.

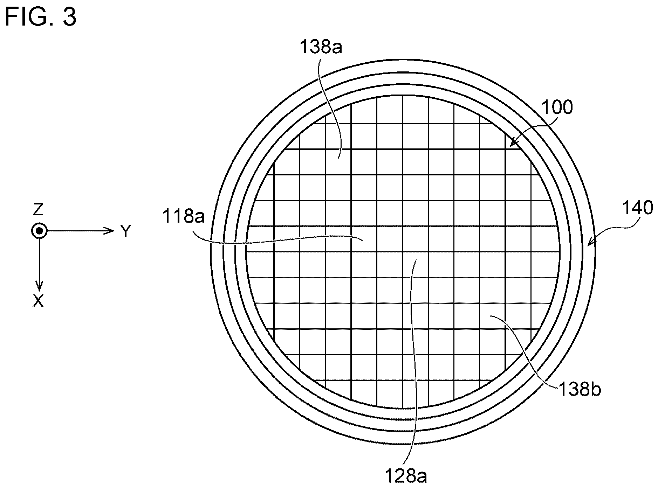

Fig. 3 is a top view of the reservoir 10 according to the present embodiment. As shown in Fig. 3, the upper surface of the input and output unit 100 according to the present embodiment is circular. The upper surface is provided with various electrodes that are spaced apart from each other and are provided with, for example, an input electrode 118a, an adjustment electrode 128a, output electrodes 138a and 138b, and the like. The electrodes according to the present embodiment are mainly rectangular, and the size of the electrodes may be, for example, about 10 µm to 100 µm on a side. The number of input electrodes may be one or more. When the number of the input electrodes is more than one, it is preferable that the number of output electrodes is greater than the number of the input electrodes. The upper surface of the input and output unit 100 is not limited to a circular shape and may be of various shapes such as a rectangular shape. Although Fig. 3 mainly shows rectangular electrodes, the shape of the electrodes may be other polygonal or circular shapes.

When an electrical signal is input to the input electrode 118a, an optical signal corresponding to the input electrical signal is generated inside the reservoir 10. The generated optical signal propagates inside the reservoir 10. When an electrical signal is input to the adjustment electrode 128a, the optical signal is amplified inside the reservoir 10 based on the input electrical signal. The electrical signal input to the input electrode 118a may be generated by the signal input device 15. The electrical signal input to the adjustment electrode 128a may be generated by the information processing device 18. The optical signal inside the reservoir 10 is converted into an electrical signal, and the electrical signal is output to the information processing device 18 by the output electrodes 138a and 138b.

The reflection unit 140 reflects the optical signal propagating inside the reservoir 10 so as to keep the optical signal inside the reservoir 10.

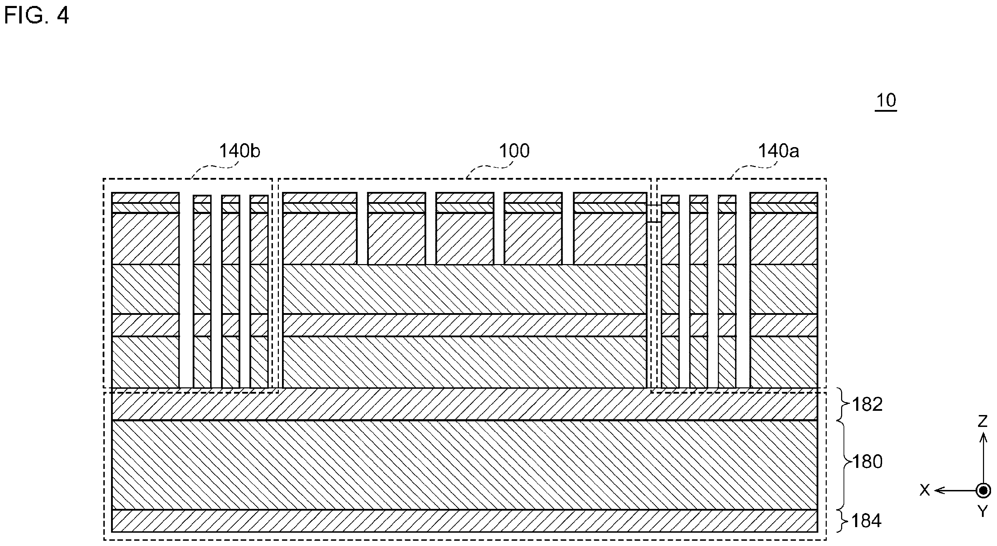

Fig. 4 is a cross-sectional view perpendicular to the Y axis of the reservoir 10 according to the present embodiment. Fig. 4 shows cross-sections of the input and output unit 100 and the reflection units 140a and 140b constituting the reservoir 10. The reservoir 10 according to the present embodiment includes a substrate 180, a lower electrode 184 provided on the lower surface of the substrate 180, a structure in which multiple semiconductor layers are stacked on the substrate 180, and an electrode provided on the structure.

The input and output unit 100 includes a substrate 180, a lower electrode 184, a lower cladding layer 182 provided on the substrate 180, multiple semiconductor layers stacked on the lower cladding layer 182, and an electrode provided thereon. Moreover, each of the reflection units 140a and 140b includes multiple semiconductor layers stacked on the lower cladding layer 182 and an electrode provided thereon.

The lower electrode 184 is made of various metals and is uniformly provided on the lower surface of the substrate 180. The lower electrode 184 according to the present embodiment may be used as a ground electrode. When an electrical signal is input to various electrodes provided on the upper surface of the input and output unit 100, a current is generated between the electrodes and the lower electrode 184, and an optical signal is generated based on the current, the optical signal is amplified, or the optical signal is detected as an electrical signal and output.

The substrate 180 is made of various semiconductor substrates and may be, for example, a GaAs substrate or an InP substrate. The substrate 180 is doped with impurities necessary to increase the electrical conductivity. The thickness of the substrate 180 may be equal to, greater than, or less than a thickness of, for example, about 300 µm. The materials constituting various semiconductor layers stacked on the substrate 180 are appropriately selected depending on the materials constituting the substrate 180.

The substrate 180 may be a substrate oriented in a plane direction such as (001), (110), (112), (221), (111), and (311), for example. Each semiconductor layer stacked on the substrate 180 is affected by the orientation of the substrate 180. The substrate 180 is preferably oriented in a plane direction other than (001) and (111). When the substrate 180 is oriented in the (001) or (111) plane direction, photons are amplified at the same amplification rate by the electrical signal from adjustment electrode 128a regardless of the photon propagation direction. In contrast, it is known that when the substrate 180 is oriented in a plane direction other than (001) and (111) (e.g., (311) or the like), the amplification rate can be different according to the photon propagation direction (see Reference document 1). Therefore, the orientation of the substrate 180 in a plane direction other than (001) and (111) allows high dimensionality in the reservoir 10 to be achieved more reliably. Reference document 1: T. Ohtoshi, T. Kuroda, A. Niwa, and S. Tsuji: Dependence of optical gain on crystal orientation in surface-emitting lasers with strained quantum wells, Appl. Phys. Lett., Vol. 65, No. 15, pp1886-1887(1994)

The lower cladding layer 182 may be formed of a material that corresponds to the material forming the substrate 180. For example, if the substrate 180 is a GaAs substrate, the lower cladding layer 182 may formed of a GaAs-based semiconductor material. The lower cladding layer 182 is doped with impurities necessary to increase the electrical conductivity. The thickness of the lower cladding layer 182 may be, for example, about 1 to 2 µm.

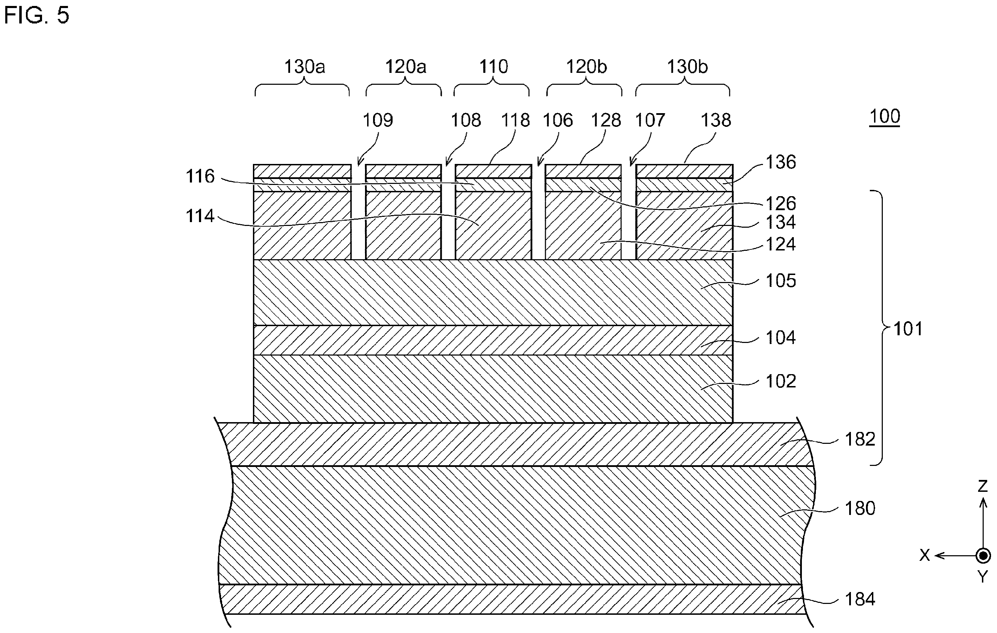

Fig. 5 is a cross-sectional view perpendicular to the Y axis of the input and output unit 100 according to the present embodiment. The input and output unit 100 receives an electrical signal from the signal input device 15 and outputs an electrical signal corresponding to the input electrical signal. The input and output unit 100 includes an input unit 110, adjustment units 120a and 120b, and output units 130a and 130b. Hereinafter, the adjustment units 120a and 120b are referred to simply as "adjustment units 120" when they are not to be distinguished from each other, and the output units 130a and 130b are referred to simply as "output units 130" when they are not to be distinguished from each other.

A lower waveguide layer 102 is provided on the lower cladding layer 182, and an active layer 104 is provided on the lower waveguide layer 102. The lower waveguide layer 102 is configured such that an optical signal generated by the conversion of an electrical signal performed by the active layer 104 described below propagates internally. The lower waveguide layer 102 is configured to have a higher refractive index than that of an adjacent layer, more specifically, configured to have a higher refractive index than that of the lower cladding layer 182. This suppresses the emission of the optical signal from the lower waveguide layer 102 to the outside and allows the optical signal to propagate inside the lower waveguide layer 102.

The thickness of the lower waveguide layer 102 may be, for example, about 0.1 to 1 µm. The lower waveguide layer 102 is formed of a material that corresponds to the material forming the substrate 180. For example, if the substrate 180 is a GaAs substrate, the lower waveguide layer 102 may be formed of a GaAs-based semiconductor material and, more specifically, formed of AlGaAs or the like.

The active layer 104 is configured to convert an optical signal and an electrical signal in a nonlinear manner. The active layer 104 can absorb or amplify an optical signal depending on the magnitude of the current supplied. The active layer 104 according to the present embodiment includes, for example, a quantum well as a layer that non-linearly converts photons (optical signal) and an electrical signal into each other. For example, if the substrate 180 is a GaAs substrate, the quantum well of the active layer 104 may comprise stacked InGaAs and GaAs. The thickness of the active layer 104 may be, for example, about 0.1 µm.

The upper waveguide layer 105 is configured such that an optical signal generated by the conversion of an electrical signal performed by the active layer 104 propagates internally. The upper waveguide layer 105 is provided on the active layer 104. The upper waveguide layer 105 is configured to have a higher refractive index than that of an adjacent layer, more specifically, configured to have a higher refractive index than that of upper cladding layers 114, 124, and 134 described below. This suppresses the emission of the optical signal to the outside of the upper waveguide layer 105 and allows the optical signal to remain inside the upper waveguide layer 105, the active layer 104, and the lower waveguide layer 102 for a longer time.

The thickness of the upper waveguide layer 105 may be, for example, about 0.1 to 1 µm. The upper waveguide layer 105 is formed of a material corresponding to the material forming the substrate 180. For example, if the substrate 180 is a GaAs substrate, the upper waveguide layer 105 may be formed of a GaAs-based semiconductor material and, more specifically, formed of AlGaAs or the like.

Impurities do not need to be added to the lower waveguide layer 102, the active layer 104, and the upper waveguide layer 105. This allows for the suppression of the loss of photons due to impurities.

The input unit 110, the adjustment units 120a and 120b, and the output units 130a and 130b include a plurality of semiconductor layers and electrodes stacked on the upper waveguide layer 105. In Fig. 5, the output unit 130 is located at the end of the input and output unit 100; however, this is non-limiting, and the input unit 110 or the adjustment unit 120 may be located at the end of the input and output unit 100.

The input unit 110 is arranged to receive an electrical signal from an external source (e.g., signal input device 15). The input unit 110 has an upper cladding layer 114, a contact layer 116, and an input electrode 118 stacked in order in the Z-axis direction on the upper waveguide layer 105. Each of the upper cladding layer 114 and the contact layer 116 may be formed of a material corresponding to the material forming the substrate 180. For example, if the substrate 180 is a GaAs substrate, each of the upper cladding layer 114 and the contact layer 116 may be formed of a GaAs-based semiconductor material. Each of the upper cladding layer 114 and the contact layer 116 is doped with impurities necessary to increase conductivity. The thickness of the upper cladding layer 114 may be, for example, about 1 to 2 µm.

The input electrode 118 is provided on the upper surface of a stacked structure 101, specifically on the contact layer 116. The input electrode 118 according to the present embodiment receives an electrical signal from the signal input device 15. When an electrical signal is input to the input electrode 118, a current corresponding to the electrical signal flows to the active layer 104. The active layer 104 according to the present embodiment generates photons corresponding to the electrical signal input to the input electrode 118. In this way, the electrical signal input to the input electrode 118 is converted into photons nonlinearly by the active layer 104.

The adjustment unit 120 has an upper cladding layer 124, a contact layer 126, and an adjustment electrode 128 stacked in order in the Z-axis direction on the upper waveguide layer 105. The upper cladding layer 124 and the contact layer 126 of the adjustment unit 120 may have substantially the same configuration as those of the upper cladding layer 114 and the contact layer 116 of the input unit 110, respectively.

The adjustment electrode 128 is provided on the upper surface of the stacked structure 101, specifically on the contact layer 126. The adjustment electrode 128 receives an electrical signal from the information processing device 18. When an electrical signal is input to the adjustment electrode 128, a current corresponding to the input electrical signal is supplied to the active layer 104, and the amplification or absorption of the optical signal by the active layer 104 is adjusted.

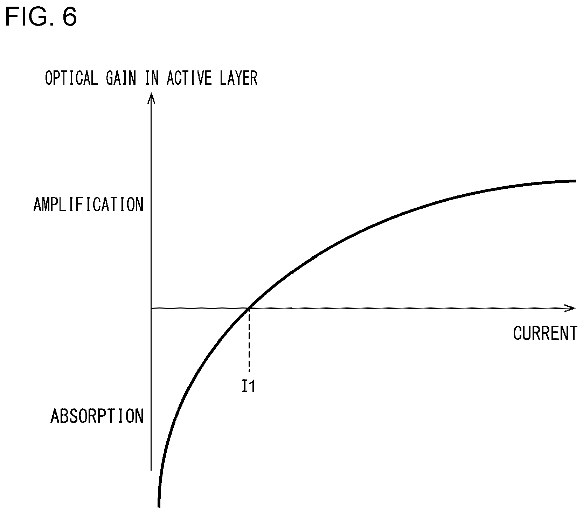

Fig. 6 is a diagram showing the relationship between the current flowing in the active layer 104 and the amplification or absorption of the optical signal by the active layer 104. In Fig. 6, the horizontal axis shows the current flowing in the active layer 104, and the vertical axis shows the ratio of amplification or absorption of the optical signal by the active layer 104. As shown in Fig. 6, when the current is smaller than I1, the active layer 104 absorbs the optical signal. On the other hand, when the current is greater than I1, the active layer 104 enhances the optical signal. When the current is I1, the active layer 104 neither enhances nor absorbs the optical signal. In the present specification, causing the active layer 104 not to enhance or absorb optical signals is also referred to as "making the active layer 104 transparent."

The behavior of the active layer 104 can be controlled by adjusting the magnitude of the current flowing in the active layer 104. For example, by inputting an electrical signal to the adjustment electrode 128 such that a current greater than I1 flows in the active layer 104, the optical signal can be amplified nonlinearly in the active layer 104. By inputting an electrical signal to the adjustment electrode 128 such that a current of I1 flows in the active layer 104, the active layer 104 can be made transparent. Inputting an electrical signal to the adjustment electrode 128 such that a current smaller than l1 flows in the active layer 104 allows the active layer 104 to absorb an optical signal nonlinearly.

Returning to Fig. 5, an explanation will be given regarding the configuration of the output unit 130. The output unit 130 has an upper cladding layer 134, a contact layer 136, and an output electrode 138 stacked in order in the Z-axis direction on the upper waveguide layer 105. The upper cladding layer 114 and the contact layer 116 of the output unit 130 may have substantially the same configuration as those of the upper cladding layer 114 and the contact layer 116 of the input unit 110, respectively.

The output electrode 138 is provided on the upper surface of the stacked structure 101, specifically on the contact layer 136. The output electrode 138 outputs an electrical signal generated by the nonlinear conversion of an optical signal performed by the active layer 104 to the outside (e.g., the information processing device 18). For example, when photons propagating in the upper waveguide layer 105 and the lower waveguide layer 102 enter the active layer 104 below the output electrode 138, electrons and holes are generated in the active layer 104. An electrical signal corresponding to these electrons and holes are output from the output electrode 138.

In the present embodiment, the input unit 110, the adjustment units 120a and 120b, and the output units 130a and 130b are configured such that the respective stacked semiconductor layers and electrodes are separated from each other by gaps 106 to 109. For example, the gap 108 is formed between the input unit 110 and the adjustment unit 120a, the gap 106 is formed between the input unit 110 and the adjustment unit 120b, the gap 109 is formed between the adjustment unit 120a and the output unit 130a, and the gap 107 is formed between the adjustment unit 120b and the output unit 130b. This suppresses the effect on an electrical signal output from the output electrode 138 due to the current generated by the electrical signal input to the input electrode 118 and the electrical signal input to the adjustment electrode 128.

The gaps 106 to109 may be formed, for example, by stacking various semiconductor layers on top of the active layer 104, forming electrodes thereon so as to integrally form a stacked structure for the input 110, the adjustment units 120a and 120b, and the output units 130a and 130b, and then etching this stacked structure. Electrodes (e.g., the input electrode 118, the adjustment electrode 128, the output electrode 138, etc.) may be formed after the gaps 106 to 109 are formed by etching or may be formed before the etching. In the present embodiment, the depth of the gaps 106 to 109 reaches the upper surface of the upper waveguide layer 105. The depth of the gaps 106 to 109 may reach the inside of the upper waveguide layer 105.

The lower cladding layer 182, the lower waveguide layer 102, the active layer 104, the upper waveguide layer 105, the upper cladding layers 114, 124, and 134, and the contact layers 116, 126, and 136 described above constitute the stacked structure 101.

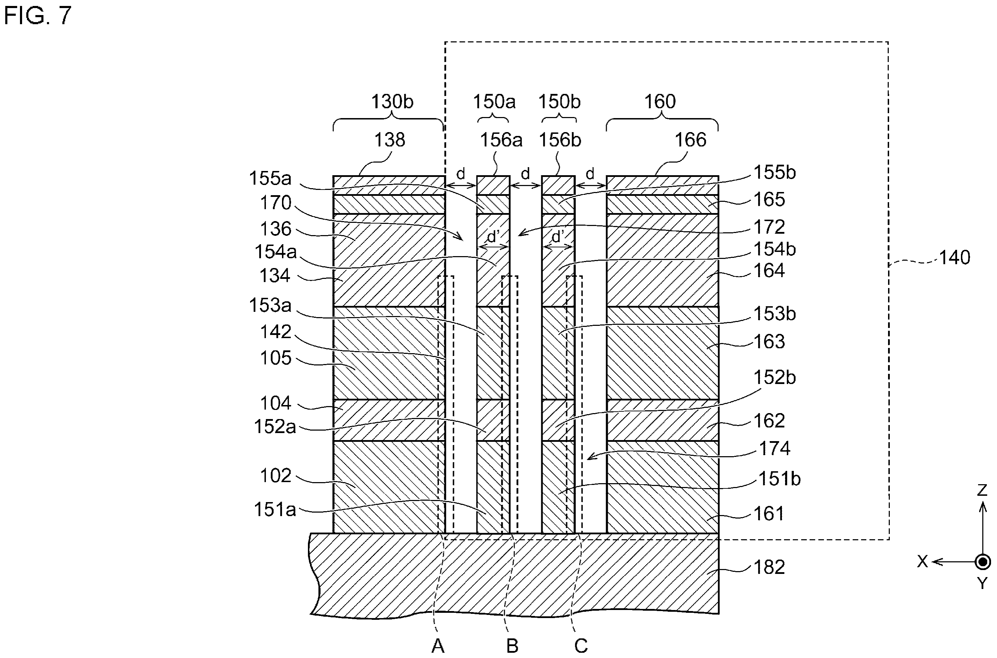

Fig. 7 is a cross-sectional view perpendicular to the Y axis for explaining the configuration of a reflection unit 140 according to the present embodiment. The reflection unit 140 is arranged in such a way that an optical signal propagating in the waveguide unit of the input and output unit 100 is reflected to the inside of the waveguide unit. The reflection unit 140 according to the present embodiment has a first mirror unit 150a, a second mirror unit 150b, and an edge 160. Although an explanation will be given in the present embodiment regarding an example in which the reflection unit 140 has two mirror units, the number of mirror units may be three or more.

A gap 170 is formed between the output unit 130b and the first mirror unit 150a, a gap 172 is formed between the first mirror unit 150a and the second mirror unit 150b, and a gap 174 is formed between the second mirror unit 150b and the edge 160. The width of these gaps 170, 172, and 174 is denoted by d. The width d is a quarter of the wavelength of light or an odd multiple thereof. The width of the first mirror unit 150a and the second mirror unit 150b is denoted by d'. The width d' is a quarter of the wavelength of light divided by the refractive index of the semiconductor or an odd multiple thereof. These gaps 170, 172, and 174 may be formed, for example, by stacking various semiconductor layers on top of the lower cladding layer 182, forming electrodes thereon so as to integrally form a stacked structure for the output unit 130b, the first mirror unit 150a, the second mirror unit 150b, and the edge 160, and then etching this stacked structure. The electrodes (specifically, the sixth mirror layers 156a, 156b, and 166) may be formed after the gaps 170, 172, and 174 are formed by etching or before the etching. These electrodes may be omitted.

The first mirror unit 150a is provided at a position away from the waveguide unit of the input and output unit 100 in the propagation direction of an optical signal. In the present embodiment, the first mirror unit 150a is provided such that a gap 170 is formed between the first mirror unit 150a and the output unit 130b (specifically, the lower waveguide layer 102, the active layer 104, the upper waveguide layer 105, etc.). In the present embodiment, the first mirror unit 150a is provided at a position away from the waveguide unit by a distance d in the in-plane direction of the XY plane (X-axis direction in Fig. 7).

The first mirror unit 150a has a first mirror layer 151a, a second mirror layer 152a, a third mirror layer 153a, a fourth mirror layer 154a, a fifth mirror layer 155a, and a sixth mirror layer 156a stacked in order in the Z-axis direction on the lower cladding layer 182. The first mirror layer 151a, the second mirror layer 152a, the third mirror layer 153a, the fourth mirror layer 154a, the fifth mirror layer 155a, and the sixth mirror layer 156a may have substantially the same material and thickness as those of the lower waveguide layer 102, the active layer 104, the upper waveguide layer 105, the upper cladding layer 134, the contact layer 136, and the output electrode 138 of the output unit 130, respectively.

The second mirror unit 150b is provided such that a gap 172 is formed between the first mirror unit 150a and the second mirror unit 150b. More specifically, the second mirror unit 150b is provided at a position away from the first mirror unit 150a by the distance d in the in-plane direction of the XY plane (X-axis direction in Fig. 7). The second mirror unit 150b has a first mirror layer 151b, a second mirror layer 152b, a third mirror layer 153b, a fourth mirror layer 154b, a fifth mirror layer 155b, and a sixth mirror layer 156b stacked in order in the Z axis direction on the lower cladding layer 182. The first mirror layer 151b, the second mirror layer 152b, the third mirror layer 153b, the fourth mirror layer 154b, the fifth mirror layer 155b, and the sixth mirror layer 156b may have substantially the same material and thickness as those of the mirror layer 151a, the second mirror layer 152a, the third mirror layer 153a, the fourth mirror layer 154a, the fifth mirror layer 155a, and the sixth mirror layer 156a, respectively.

The edge 160 is provided such that a gap 174 is formed between the second mirror unit 150b and the edge 160. More specifically, the edge 160 is provided at a position away from the second mirror unit 150b by the distance d in the in-plane direction of the XY plane (X-axis direction in Fig. 7). The edge 160 has a first mirror layer 161, a second mirror layer 162, a third mirror layer 163, a fourth mirror layer 164, a fifth mirror layer 165, and a sixth mirror layer 166 stacked in order in the Z-axis direction on the lower cladding layer 182. The first mirror layer 161, the second mirror layer 162, the third mirror layer 163, the fourth mirror layer 164, the fifth mirror layer 165, and the sixth mirror layer 166 may have substantially the same material and thickness as those of the mirror layer 151a, the second mirror layer 152a, the third mirror layer 153a, the fourth mirror layer 154a, the fifth mirror layer 155a, and the sixth mirror layer 156a, respectively.

The first mirror unit 150a, the second mirror unit 150b, and the edge 160 provided in this manner allow the reflection unit 140 to reflect an optical signal propagating through the lower waveguide layer 102, the active layer 104, and the upper waveguide layer 105 toward the inside of the lower waveguide layer 102 and the upper waveguide layer 105. More specifically, at the interface between the gap and the semiconductor that constitutes each layer of the output unit 130b, the first mirror unit 150a, or the second mirror unit 150b, the reflection of photons occurs in accordance with the difference in refractive index between the semiconductor and air.

For example, at an interface A between the layers, the lower waveguide layer 102, the active layer 104, and the upper waveguide layer 105, and the gap 170, most of the photons propagating through the active layer 104 and the upper waveguide layer 105 are reflected to the inside of the output unit 130b. Most of the photons that have passed through the interface A and entered the first mirror unit 150a are reflected in the direction toward the input and output unit 100 at an interface B between the first mirror unit 150a and the gap 172. Furthermore, most of the photons that have passed through the interface B and entered the second mirror unit 150b are reflected in the direction toward the input and output unit 100 at an interface C between the second mirror unit 150b and gap 174. Thus, by providing the first mirror unit 150a and the second mirror unit 150b, the reflection of photons is caused by the difference in refractive index between the semiconductor and air, allowing the reflectance to be, for example, 99%. These gaps 170, 172, and 174 are preferably deeper, and, for example, the gaps 170, 172, and 174 may extend inside the lower cladding layer 182. However, as in the present embodiment, even if the gaps 170, 172, and 174 do not extend inside the lower cladding layer 182 or are shallower in depth, the gaps still function to reflect photons.

As shown in Fig. 4, the reflection units 140a and 140b are provided at the respective ends of the input and output unit 100. Therefore, photons propagating inside the reservoir 10 are reflected by the reflection units 140a and 140b at the respective ends. This allows the photons to remain inside the reservoir 10.

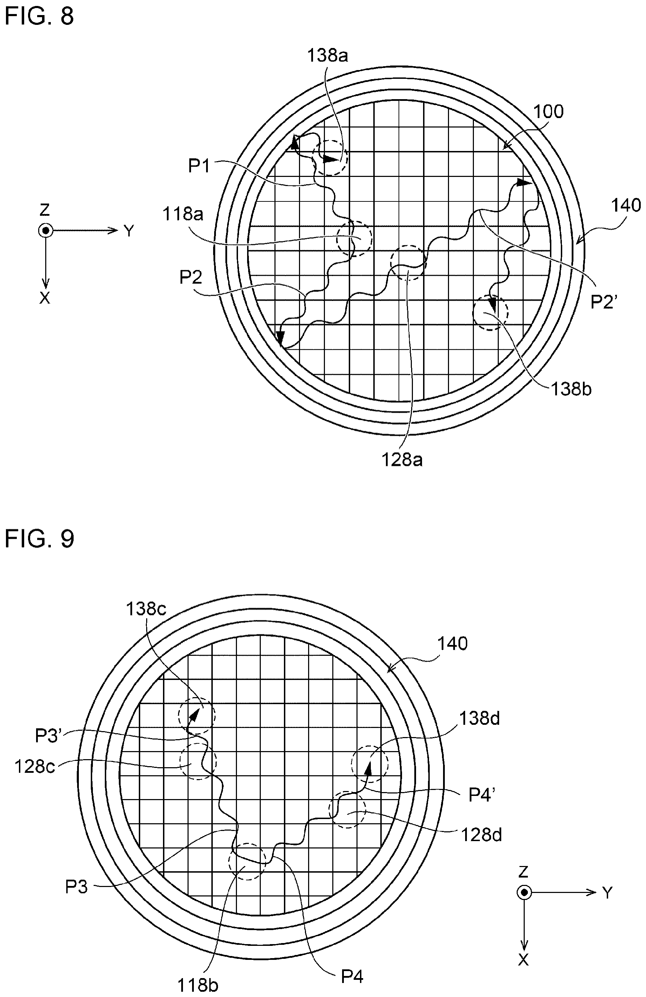

Fig. 8 is a diagram for explaining an example of photon propagation in the reservoir 10 according to the present embodiment. In the example shown in Fig. 8, when an electrical signal is input from the signal input device 15 to the input electrode 118a, a photon P1 corresponding to the input electrical signal is generated. This photon P1 propagates inside the reservoir 10 while being reflected by the reflection unit 140. When the photon P1 is converted into an electrical signal, the electrical signal is output by the output electrode 138a.

A photon P2 generated based on the electrical signal input to the input electrode 118a propagates inside the reservoir 10 while being reflected by the reflection section 140 or amplified or absorbed based on the electrical signal input to the adjustment electrode 128a. An amplified or absorbed photon P2' propagates inside the reservoir 10 while being reflected by the reflection unit 140. When the photon P2' is converted into an electrical signal, the electrical signal is output by the output electrode 138b.

Fig. 9 is a diagram for explaining differences in photon amplification rate due to adjustment electrodes depending on a photon propagation direction when a substrate 180 is oriented in a plane direction other than (100) and (111). In the example shown in Fig. 9, the substrate 180 may be, for example, a substrate oriented in a (311) plane direction.

In the example shown in Fig. 9, two photons P3 and P4 are generated in response to an electrical signal input to the input electrode 118b. The direction of arrows at the photons P3 and P4 (or photons P3' and P4') indicate the respective propagation directions of the photons. The two photons P3 and P4 propagate in different directions. The photon P3 is amplified in response to the electrical signal from an adjustment electrode 128c, and the photon P4 is amplified in response to the electrical signal from an adjustment electrode 128d. The electrical signal from the adjustment electrode 128c and the electrical signal from the adjustment electrode 128d are of the same magnitude. Since the photons P3 and P4 are amplified when propagating in different directions, the photons are amplified at different amplification rates even if the electrical signals from the adjustment electrodes 128c and 128d are of the same magnitude. As a result, the photons P3' and P4' amplified at different amplification rates are converted into electrical signals and output from the output electrodes 138c and 138d, respectively. By amplifying multiple photons at different amplification rates in this manner, the high dimensionality of the reservoir 10 can be achieved more reliably.

In order to achieve reservoir computing, the reservoir is required to have short-term memory, nonlinearity, and high dimensionality. According to the reservoir 10 of the present embodiment, the reflection unit 140 allows an optical signal to remain inside the waveguide unit for a certain period of time, thus realizing short-term memory in the reservoir 10. Further, since the reservoir 10 according to the present embodiment has a plurality of output electrodes 138a and 138b, the high dimensionality of information that is output can be realized, making it possible to generate data suitable for machine learning. Furthermore, nonlinear conversion between optical and electrical signals is performed by the active layer 104. Thus, the reservoir 10 according to the present embodiment allows for the realization of the short-term memory, high dimensionality, and non-linearity required for reservoir computing. According to the reservoir 10 of the present embodiment, there are no time constraints like those in time-delay reservoir computing, and reservoir computing can be widely used for many purposes, and the scalability of the performance thereof can be improved.

### (Second embodiment)

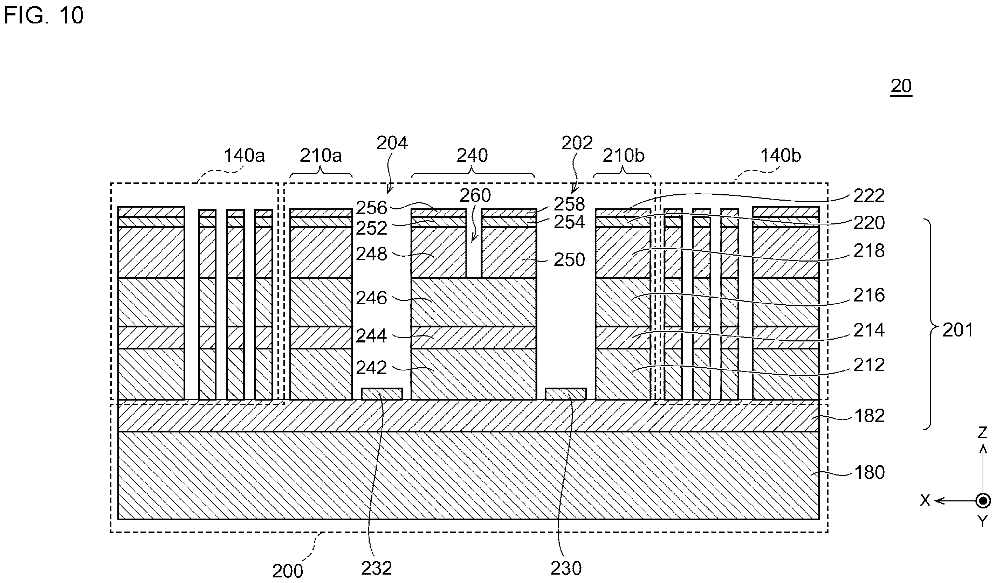

A reservoir 20 according to the second embodiment differs from the lower electrode 184 according to the first embodiment mainly in the configuration and arrangement of the ground electrode. Fig. 10 is a cross-sectional view perpendicular to the Y axis of the reservoir 20 according to the second embodiment. Fig. 10 shows cross-sections of the input and output unit 200 and the reflection units 140a and 140b constituting the reservoir 20. In Fig. 10, like numerals represent like constituting elements in the reservoir 10 according to the first embodiment, and the description thereof is appropriately omitted.

The input and output unit 200 according to the present embodiment has a substrate 180, a stacked structure 201 formed by stacking a plurality of semiconductor layers on the substrate 180, and an input electrode 222, ground electrodes 230 and 232, and output electrodes 256 and 258 each provided on the upper surface of the stacked structure 201. In other words, the input and output unit 200 according to the present embodiment has the substrate 180, the lower cladding layer 182, the input units 210a and 210b, the output unit 240, and the ground electrodes 230 and 232.

The input units 210a and 210b are each formed having a plurality of semiconductor layers on the lower cladding layer 182 and an electrode provided thereon. The input units 210a and 210b may have substantially the same configuration, and the configuration of the input unit 210b will be described here.

The input unit 210b is formed having a lower waveguide layer 212, an active layer 214, an upper waveguide layer 216, an upper cladding layer 218, and a contact layer 220 stacked in this order on the lower cladding layer 182, and an input electrode 222 provided on the contact layer 220.

The output unit 240 is formed having a lower waveguide layer 242, an active layer 244, an upper waveguide layer 246, upper cladding layers 248 and 250, and contact layers 252 and 254 stacked in this order on the lower cladding layer 182, and output electrodes 256 and 258 provided on the contact layers 252 and 254. A gap 260 is provided between the upper cladding layer 248, the contact layer 252, and the output electrode 256 and the upper cladding layer 250, the contact layer 254, and the output electrode 258. This gap 260 separates signals from the output electrodes 256 and 258.

A gap 202 is provided between the input unit 210b and the output unit 240. This gap 202 separates signals from the input unit 210b and the output unit 240. This gap 202 reaches the upper surface of the lower cladding layer 182. The depth of the gap 202 may be a few micrometers.

The lower cladding layer 182, the lower waveguiding layers 212 and 242, the active layers 214 and 244, the upper waveguiding layers 216 and 246, the upper cladding layers 218, 248, and 250, and the contact layers 220, 252, and 254 described above constitute the stacked structure 201.

The ground electrode 230 is provided on the upper surface of the stacked structure 201, more specifically, on the lower cladding layer 182 in the gap 202. The ground electrode 232 is provided on the upper surface of the stacked structure 201 and is provided on the lower cladding layer 182 in the gap 204 between the input unit 210a and the output unit 240.

In the reservoir 10 according to the first embodiment, the input electrode 118 and the output electrode 138 are provided on the upper surface of the stacked structure 101, and the lower electrode 184, which constitutes the ground electrode, is provided on the lower surface of the substrate 180. Therefore, in the reservoir 10 according to the first embodiment, the entire reservoir 10 forms one capacitor. If signals input and output at the input electrode 118 and the output electrode 138 are of high frequency, the large capacitance of the capacitor formed limits the frequency of signals that can be responded to, and signal degradation may occur.

In contrast, in the reservoir 20 according to the second embodiment, the input electrode 222, the output electrodes 256 and 258, and the ground electrodes 230 and 232 are all provided on the upper surface of the stacked structure 201. This allows the distance between the electrodes, the input electrode 222 and the output electrodes 256 and 258, and the ground electrodes 230 and 232 to be brought closer together, reducing the capacitance of the capacitor formed in the reservoir 20 (more specifically, the input and output unit 200). As a result, a reservoir 20 can be achieved that can respond to high-speed signals and suppress signal degradation. Further, according to the present embodiment, there is no need to provide a ground electrode under the substrate 180, and therefore there is no need to dope the substrate 180 with impurities.

Although no adjustment electrode is shown in Fig. 10, an adjustment electrode may be provided in addition to (or in place of some of) the input electrode 222 and the output electrodes 256 and 258.

The number of ground electrodes may match the number of the input and output electrodes, or a plurality of input electrodes or a plurality of output electrodes may share one ground electrode. For example, one ground electrode may be provided between two output electrodes, and two output electrodes may share one ground electrode.

In the present embodiment, an example is described in which the gaps 202 and 204 reach the upper surface of the lower cladding layer 182. Not limited to this, the gaps 202 and 204 may be formed at a depth where the lower waveguide layers 242 and 212 and the lower waveguide layer of the input unit 210a are connected. In this case, a ground electrode can be provided in each gap on the integrated lower waveguide layer. The lower waveguide layer is doped with impurities necessary to increase conductivity in this case.

### (Third embodiment)

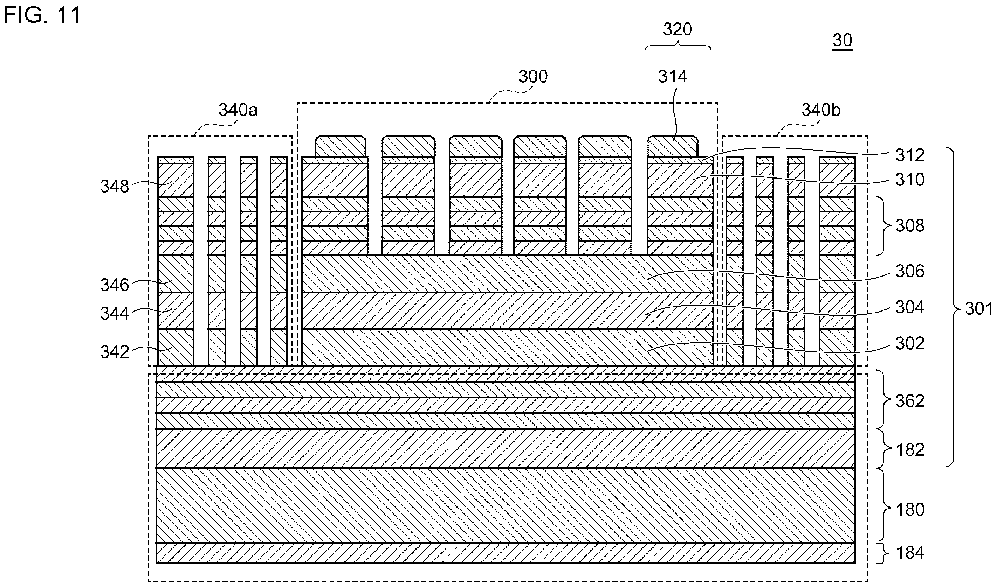

Fig. 11 is a cross-sectional view perpendicular to the Y axis of a reservoir 30 according to the third embodiment. Fig. 11 shows cross-sections of the input and output unit 300 and reflection units 340a and 340b constituting the reservoir 30. In Fig. 11, like numerals represent like constituting elements in the reservoir 10 according to the first embodiment, and the description thereof is appropriately omitted.

The input and output unit 300 includes a substrate 180, a stacked structure 301 formed by stacking a plurality of semiconductor layers on the substrate 180, a lower electrode 184, and an upper electrode 314 provided on the upper surface of the stacked structure 301. On the substrate 180, the lower cladding layer 182, the lower reflection layer 362, the lower waveguide layer 302, the active layer 304, and the upper waveguide layer 306 are stacked in this order. On the upper waveguide layer 306, a plurality of signal transmission units 320 spaced apart from one another are provided.

In the stacked structure 301 according to the present embodiment, a lower reflection layer 362, which is formed by stacking a plurality of pairs of two semiconductor layers with different refractive indices, is provided under the lower waveguide layer 302. The lower reflection layer 362 may, for example, have a stacked structure of a pair of GaAs and AlAs layers. An AlGaAs layer may be used instead of an AlAs layer. Although Fig. 11 shows the lower reflection layer 362 composed of two pairs (four semiconductor layers), the number of pairs constituting the lower reflection layer 362 may be three or more.

The lower reflection layer 362 reflects photons propagating through the lower waveguide layer 302 provided between the active layer 304 and the lower reflection layer 362, keeping the photons inside the lower waveguide layer 302. This allows the photons to remain in the lower waveguide layer 302 for a longer time.

The signal transmission unit 320 has an upper reflection layer 308, an upper cladding layer 310, and a contact layer 312, which are stacked on the upper waveguide layer 306 in this order. The upper electrode 314 is provided on the contact layer 312. The upper electrode 314 may function as an input electrode, an output electrode, or an adjustment electrode.

The upper reflection layer 308 may be configured in the same manner as the lower reflective layer 362. The upper reflection layer 308 reflects photons propagating through the upper waveguide layer 306 provided between the active layer 304 and the upper reflection layer 308 to keep the photons inside the upper waveguide layer 306. This allows the photons to remain in the upper waveguide layer 306 for a longer time.

The reflection units 340a and 340b are configured to keep photons propagating through the lower waveguide layer 302 and the upper waveguide layer 306 inside in the same way as in 140a, 140b according to the first embodiment. The reflection units 340a and 340b according to the present embodiment may include the same configuration as that of the upper waveguide layer 306.

### (Supplementary note)

Described above is an explanation of the present invention based on the embodiments. These embodiments are intended to be illustrative only, and it will be obvious to those skilled in the art that various modifications to constituting elements and processes could be developed and that such modifications are also within the scope of the present invention.

In the above embodiment, an example is described in which the reflection unit 140 reflects photons using the difference in refractive index between semiconductors and air. Not limited to this, the reflection unit may be configured to reflect photons using the difference in refractive index by connecting semiconductors with different refractive indices. For example, the reflection unit may be provided so as to be in contact with the waveguide unit and may be composed of a semiconductor with a refractive index lower than that of the waveguide. This allows for reflection of photons based on the difference in refractive index at the interface between the waveguide unit and the reflection unit. The reflection unit 140 may also reflect photons using the difference in refractive index between the semiconductor and an organic material such as a polymer having a refractive index lower than that of the semiconductor.

In the above embodiment, an example is described in which the active layer 104 has a quantum well structure. Not limited to this, the active layer may have various structures composed of semiconductors that can convert an optical signal and an electrical signal into each other in a nonlinear manner.

The active layer may also include various known quantum dots. The active layer formed in this manner is also capable of converting an optical signal and an electrical signal into each other in a nonlinear manner. The active layer can also amplify or absorb optical signals or behave transparently with respect to optical signals, depending on the size of the current supplied.

In the above embodiment, an example is described in which the first mirror unit 150a, the second mirror unit 150b, and the edge 160 are provided so as to surround the input and output unit 100. Even if the first mirror unit 150a, the second mirror unit 150b, and the edge 160 are not provided, photons are reflected at the edge of the input and output unit 100 (for example, at the interface A of the output unit 130) toward the inside thereof. In this case, although the reflectance is, for example, about 30%, the edge of the input and output unit 100 functions as a reflection unit.

In the above embodiment, an example is described in which the reflection unit 140 has two mirror units (the first mirror unit 150a and the second mirror unit 150b). The combinations of mirror units and gaps between the mirror units and adjacent members thereof (other mirror units or input and output units) is not limited to two sets as in the above embodiment and may be three sets or more. The greater the number of combinations of mirror units and gaps, the higher the reflectance.

The edge of the input and output unit 100 (e.g., the edge on the interface A side of the output unit 130) may be etched and removed, and a stacked semiconductor structure (or one semiconductor layer) composed of a semiconductor of a type different from that of the semiconductor constituting the edge of the input and output unit 100 may be formed there. A reflection unit may be further formed by forming a plurality of sets each composed of a mirror unit and a gap as described above.

It is also possible to combine any components of a reservoir according to one embodiment with a reservoir according to another embodiment. For example, a configuration similar to that of the reflection layer (the upper reflection layer 308 or lower reflective layer 362) according to the third embodiment can be incorporated into the reservoir 20 according to the second embodiment.

### INDUSTRIAL APPLICABILITY

The present invention relates to an optical device.

### REFERENCE SIGNS LIST

1 information processing system, 10, 20, 30 reservoir, 18 information processing device, 100, 200, 300 input and output unit, 101, 201 stacked structure, 102, 212, 242, 302 lower waveguide layer, 104, 214, 244, 304 active layer, 105, 216, 246, 306 upper waveguide layer, 112, 124, 134, 218, 248, 250, 310 upper cladding layer, 116,126,136, 220, 252, 254, 312 contact layer, 118, 222 input electrode, 128 adjustment electrode, 138, 256, 258 output electrode, 140 reflection unit, 150a first mirror unit, 150b second mirror unit, 180 substrate, 182 lower cladding layer, 184 lower electrode, 230, 232 ground electrode, 308 upper waveguide layer, 314 upper electrode, 320 signal transmission unit, 362 lower reflection layer

## Claims

1. An optical device comprising:
an input electrode to which an electrical signal is input;
a conversion unit that converts an electrical signal and an optical signal into each other in a nonlinear manner;
a waveguide unit inside which an optical signal generated by the conversion unit through conversion of the electrical signal input to the input electrode propagates;
a plurality of output electrodes that each output an electrical signal generated by the conversion unit through conversion of the optical signal propagating in the waveguide unit; and
a reflection unit that is arranged so as to reflect, toward the inside of the waveguide unit, the optical signal propagating in the waveguide unit.

2. The optical device according to Claim 1,
wherein the reflection unit has a plurality of mirror units arranged being spaced apart from one another in the propagation direction of the optical signal and positioned away from the waveguide unit in the propagation direction.

3. The optical device according to Claim 1,
wherein the conversion unit includes a quantum well or a quantum dot that converts an electrical signal and an optical signal into each other in a nonlinear manner.

4. The optical device according to Claim 3, further comprising:
an electrode for supplying the conversion unit with a current for amplifying an optical signal propagating in the waveguide unit or a current for making the conversion unit transparent.

5. The optical device according to any one of Claims 1 through 4,
wherein the optical device has a stacked structure formed by stacking a plurality of semiconductor layers including an active layer constituting the conversion unit and a waveguide layer constituting the waveguide unit, and
the input electrode and the output electrode are each provided on an upper surface of the stacked structure.

6. The optical device according to Claim 5, further comprising:
a ground electrode that is provided on the upper surface of the stacked structure.

7. The optical device according to Claim 5,
wherein the stacked structure further includes a reflection layer formed by stacking a plurality of pairs of two stacked semiconductor layers with different refractive indices, and
wherein the waveguide layer is provided between the active layer and the reflection layer.

8. The optical device according to Claim 7,
wherein the waveguide layer is an upper waveguide layer provided on the active layer,
wherein the reflection layer is an upper reflection layer provided on the upper waveguide layer, and
wherein the stacked structure further includes a lower waveguide layer provided under the active layer and a lower reflection layer formed by stacking a plurality of pairs of two stacked semiconductor layers with different refractive indices.

9. The optical device according to Claim 5,
wherein the stacked structure is configured by stacking the plurality of semiconductor layers on a substrate, and
wherein the substrate is oriented in a plane direction other than (100) and (111).
